# EUROPEAN PATENT SPECIFICATION

(11) **EP 3 822 020 B1**
(45) Date of publication and mention of the grant of the patent: **06.09.2023**
(21) Application number: 20204470.7
(22) Date of filing: 28.10.2020
(51) Int. Cl.: B23Q 1/01, B23Q 1/62, B23Q 1/44, B23Q 1/60

(54) **CNC MACHINING CENTER**
CNC BEARBEITUNGSMASCHINE
CENTRE D'USINAGE CNC

(30) Priority: 18.11.2019 IT 201900021375
(43) Date of publication of application: 19.05.2021
(73) Proprietor: C.M.S. S.p.A., 24019 Zogno (BG) (IT)
(72) Inventor: RINALDI, Nicola, 24125 Bergamo (BG) (IT); LAZZARINI, Ramon, 24030 Paladina (BG) (IT)
(74) Representative: Luppi Intellectual Property S.r.l.

(56) References cited:
- EP-A1- 0 665 074
- DE-A1-102009 058 649
- US-A1- 2008 082 202

## Description

### Background of the invention

The invention relates to a multi-axis numerically controlled machining centre, in particular a machining centre comprising at least one machining unit (for example a machining unit comprising at least one tool-holding spindle for stock removal) with at least three linear work axes X, Y, Z (for example with a Cartesian axis structure), two horizontal X, Y axes and one vertical Z axis.

Specifically, but not exclusively, the invention can be applied for stock removal from workpieces made of plastics, glass, stone, metal, composite materials, carbon fibre, aluminium, light alloys, etc.

The prior art comprises multi-axis numerically controlled machining centres provided with at least one so-called vertical cross carriage X, Z fitted to a cross member arranged above a workpiece-holding table, in which there is a corresponding movement between the cross member and the table along a longitudinal axis (Y axis).

A cross carriage means a carriage or slide that is movable on horizontal sliding guides arranged on the cross member along a transverse axis (X axis) and supports a vertical arm that is movable along a vertical axis (Z axis), in which the carriage or slide comprises shoes that are slidably coupled with the horizontal sliding guides on the cross member and the vertical arm is provided with vertical sliding guides coupled with further shoes arranged on the carriage or slide.

The vertical arm carries below the machining unit that can comprise, for example, an electro spindle fitted to a machining head. In these machining centres, to enable workpieces with a great vertical dimension to be machined, the cross carriage must be positioned at a relatively great height.
DE 102009058649 A1 **discloses a machining centre as in the preamble of claim 1.**

One of the drawbacks of the prior art is represented by the fact that, when the portion of workpiece to be machined is relatively "low", i.e. when the vertical dimension thereof is low, the vertical arm must be necessarily moved downwards to the workpiece machining zone, near the workpiece-holding table, so the distance will be relatively great between the machining zone, in which the workpiece is machined by the tool carried by the electro spindle carried by the vertical arm, and the structural constraint supporting the vertical arm (where this constraint consists of shoes arranged on the cross carriage).

This entails the risk of excessive flexure of the vertical arm during machining, and a considerable increase in vibrations and, in general, a decrease in the stiffness of the system.

This drawback is aggravated when a machining centre is mainly used to machine relatively "low" workpieces and only rarely very "high" workpieces, which generally occurs in most cases. In this case, in fact, most machining tasks are performed in the most unfavourable situation, i.e. with the vertical arm protruding greatly downwards at a relatively great distance from the last structural constraint supporting the arm, whereas only a minimum part of the machining tasks is performed in the most favourable position.

### Summary of the invention

One object of the invention is to make a machining centre that is able to overcome the aforesaid drawback of the prior art.

One object of the invention is to provide an alternative solution to the problem of machining workpieces by a machining unit fitted to a vertical arm that is slidable vertically on an aforesaid cross carriage.

One advantage is to avoid excessive flexure of the vertical arm during machining of a portion of the relatively low workpiece.

One advantage is to reduce the risk of generating excessive vibrations during machining of a portion of the relatively low workpiece.

One advantage is to provide a machining centre with relatively high stiffness in different operating configurations.

One advantage is to give rise to a machining centre with a vertical arm carried by a cross carriage in which, in practice in each operating configuration and for any type of workpiece, the distance is relatively low between the machining zone of the workpiece and the structural constraint supporting the arm on the cross carriage.

One advantage is to make available a numerically controlled machining centre that is constructionally simple and cheap.

One advantage is to permit a relatively high vertical stroke of the vertical arm that carries the machining unit, with the consequent possibility of performing machining tasks on both high workpieces (at a relatively high vertical distance from the work surface), and on low workpieces (at a relatively low vertical distance).

Such objects and advantages, and still others, are achieved by a machining centre according to one or more of the claims set out below.

In one embodiment, a numerically controlled machining centre comprises a horizontal cross member, a first support that is movable on the cross member along a horizontal machining axis, a second support supported by the first support and movable along a vertical machining axis, a machining unit arranged on the second support to perform machining tasks on a workpiece, a third support provided with vertical sliding means for vertical slidable coupling between the second support and the third support and vertical sliding means for vertical slidable coupling between the first support and the third support, the third support being movable vertically with the possibility of adopting at least one lower position, suitable for machining the workpiece in a machining zone at a lower level, and at least one upper position, suitable for machining the workpiece in a machining zone in a higher position, in which the vertical sliding means, when in the lower position, is nearer a work surface than when in the upper position.

The first support is provided with vertical sliding means (which is fixed to the first support) for vertical slidable coupling between the second support and the first support.

### Brief description of the drawings

The invention can be better understood and implemented with reference to the attached drawings that illustrate embodiments by way of non-limiting examples, in which:
- Figure 1 shows a perspective view of a first embodiment of a machining centre according to the invention in a first operating configuration;
- Figure 2 shows the machining centre of Figure 1 in a second operating configuration;
- Figure 3 shows an enlarged detail of Figure 1;
- Figure 4 shows an enlarged detail of Figure 2;
- Figure 5 shows, on the left, a front view and, on the right, a side view from the left of the front view, of the cross carriage and of the vertical arm of the machining centre in the configuration of Figure 1;
- Figure 6 shows, on the left, a front view and, on the right, a side view, from the left of the front view, of the cross carriage and of the vertical arm of the machining centre in the configuration of Figure 2;
- Figure 7 is a perspective view of an example of an assembly consisting of the cross carriage and of the vertical arm and usable in a second embodiment of a machining centre according to the invention;
- Figure 8 is a view of the assembly of Figure 7 in a different perspective;
- Figure 9 is a vertical raised front view of the assembly of Figure 7;
- Figure 10 is a side view from the left of Figure 9;
- Figure 11 is a side view from the right of Figure 9;
- Figure 12 is a rear view of the assembly of Figure 7.

### Detailed description

For the sake of simplicity and clarity of exposition, identical elements of different embodiments have been indicated by the same numbering.

With reference to the aforesaid figures, a numerically controlled machining centre has been indicated overall with 1.

The machining centre 1 comprises at least one work surface 2. The work surface 2 may define, in particular, a horizontal resting plane for the workpiece being machined. The work surface 2 may comprise, in particular, workpiece locking and/or positioning means. The work surface 2 may comprise, in particular, a workpiece-holding table.

The machining centre 1 comprises at least one horizontal cross member 3 arranged above the work surface 2. The machining centre 1 comprises means for reciprocal movement between the cross member 3 and the work surface 2 along a first controlled horizontal machining axis. The first machining axis is a longitudinal axis or Y axis. In this specific embodiment, the cross member 3 is movable on linear sliding guides.

The machining centre 1 comprises at least one first support 4 that is movable on the cross member 3 along a second controlled horizontal machining axis. The second machining axis may be, in particular, orthogonal to the first machining axis. The second machining axis may be, in particular, a transverse axis or X axis. The second machining axis may be, in particular, parallel to a longitudinal extent of the cross member 3. The first support 4 may comprise, in particular, a carriage or slide that is slidable on the cross member 3 along horizontal guide means 13 arranged on the cross member 3. The first support 4 may be provided, in particular, with horizontal guiding means 14 coupled slidingly with the horizontal guide means 13. The horizontal guiding means 14 may comprise, in particular, shoe means.

The machining centre 1 comprises at least one second support 5 movable along a third controlled vertical machining axis. The third machining axis may be, in particular, orthogonal to the first machining axis and to the second machining axis. The third machining axis may be, in particular, a linear vertical axis, or Z axis, thus giving rise to a trio of orthogonal axes X, Y, Z.

In the present description, for simplicity of exposition, the motor means, which is considered to control the machining axes X, Y, Z controlled by the numeric control, is not disclosed in detail. This motor means may comprise, for example, motor means of known type.

The second support 5 may comprise, in particular, a vertical arm, i.e. an arm extending vertically upwards, which is movable vertically. The first support 4 may comprise, in particular, a so-called cross carriage, i.e. a carriage or slide provided with horizontal guiding means (for example shoes) for the horizontal sliding on the cross member 3 and vertical sliding means (for example shoes) to permit vertical sliding of another support (for example of the second support 5 or vertical arm) on the cross carriage.

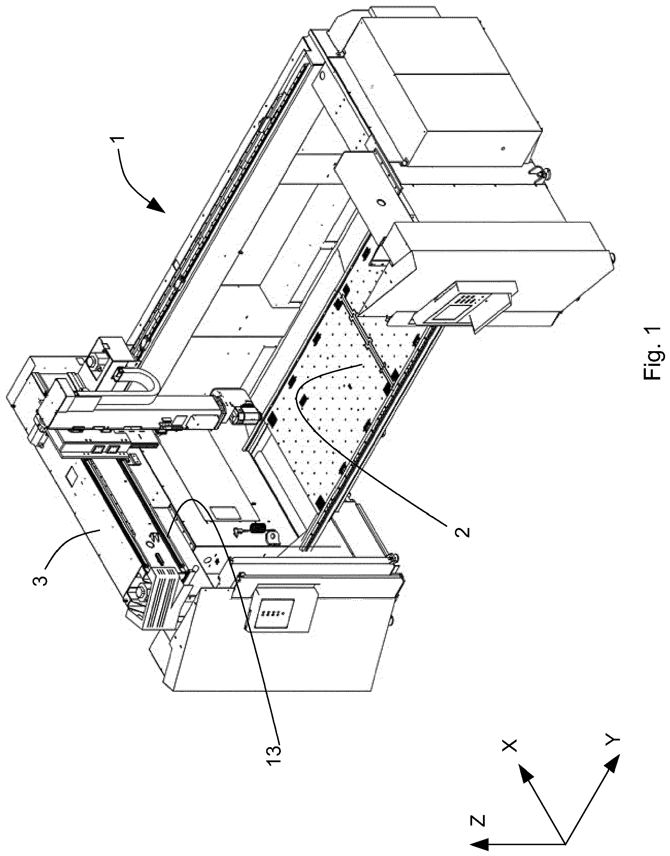

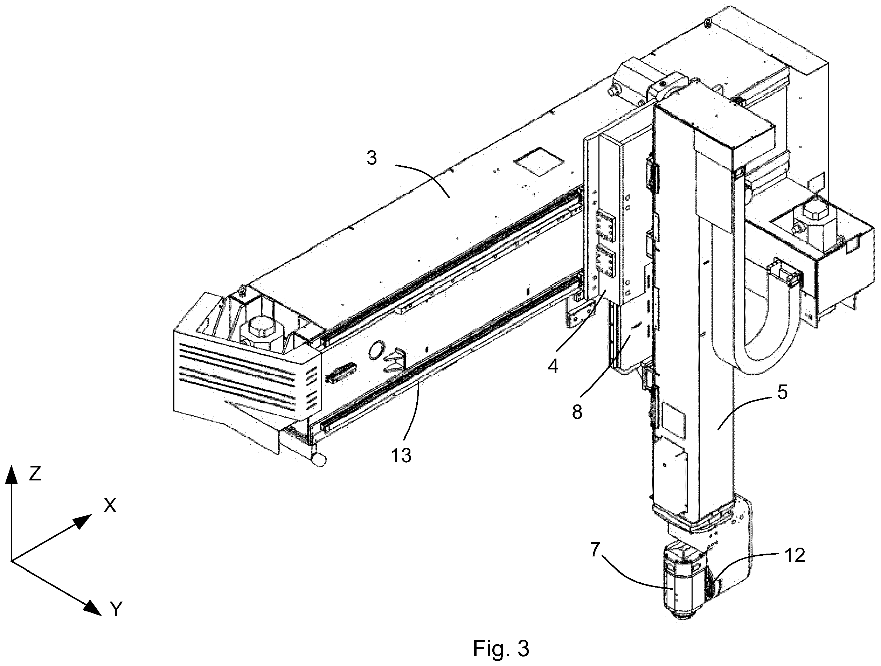

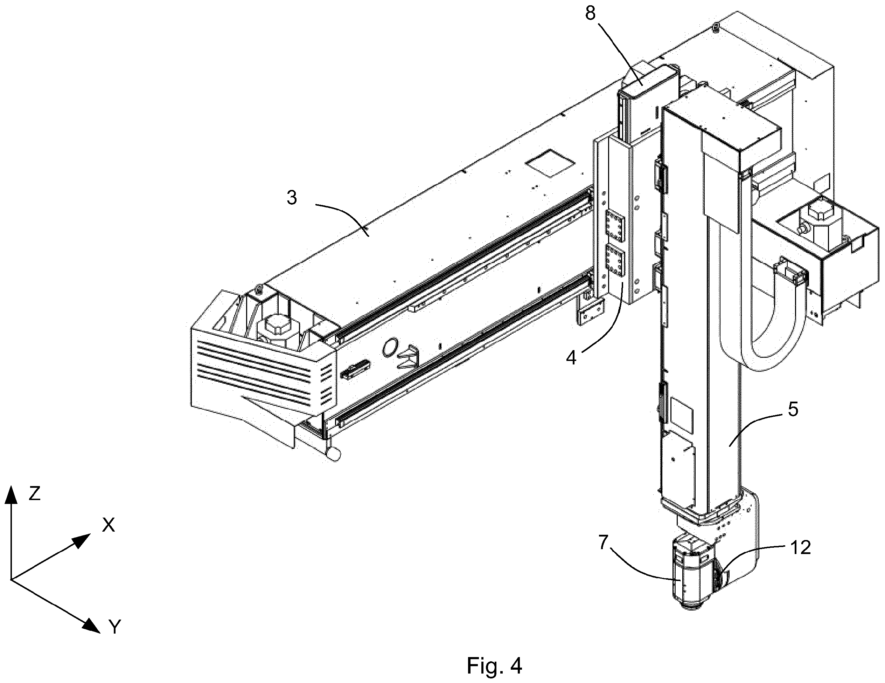

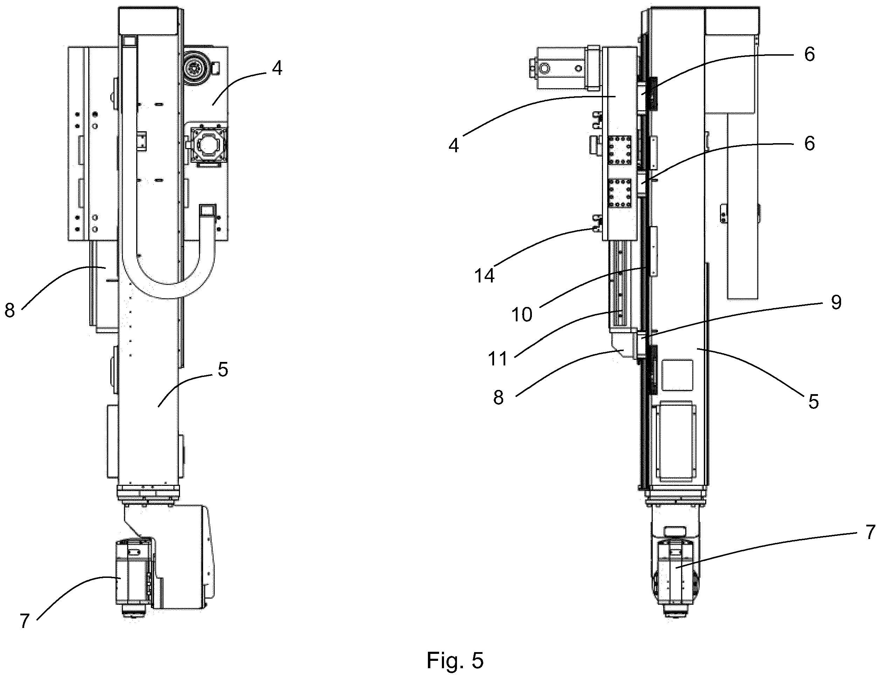

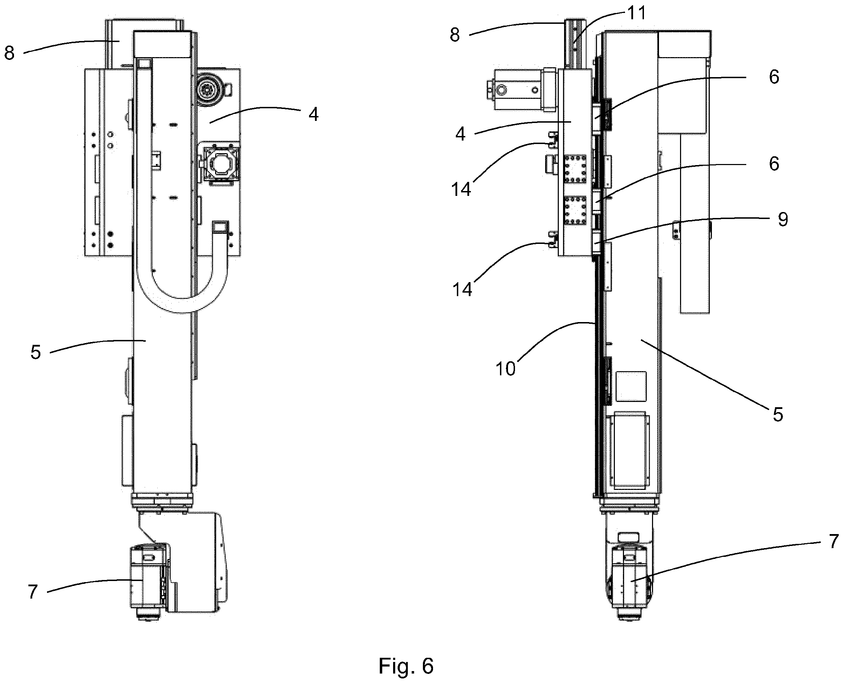

The machining centre 1 comprises (see Figures 1-6) vertical sliding means 6 (or first vertical sliding means 6 or fixed vertical sliding means 6) arranged on the first support 5 for slidable coupling between the second support 5 and the first support 4 along the third machining axis (vertical axis Z). The fixed vertical sliding means 6 may comprise, in particular, shoe means. The fixed vertical sliding means 6 may comprise, as in the specific embodiment of Figures 1-6, two pairs of shoes.

The machining centre 1 comprises at least one machining unit 7 arranged on the second support 5 with the possibility of adopting at least one machining position in which it can perform machining tasks on a workpiece arranged on the work surface 2 in a zone located below the fixed vertical sliding means 6.

The machining centre 1 comprises at least one third support 8 movable vertically on the first support 4. The third support 8 is provided with vertical sliding means 9 (or second vertical sliding means 9 or movable vertical sliding means 9) for coupling slidably together, in a vertical direction, the second support 5 and the third support 8.

In this context, the terms "fixed" and "movable", used with reference to the vertical "fixed" sliding means 6 and to the vertical "movable" sliding means 9, can mean, in particular, "fixed" and "movable" with respect to the first support 4.

The movable vertical sliding means 9 may be arranged, in particular, below fixed vertical sliding means 6.

The movable vertical sliding means 9 may comprise, in particular, shoe means. The movable vertical sliding means 9 may comprise, as in the specific embodiment of Figures 1-6, a pair of shoes.

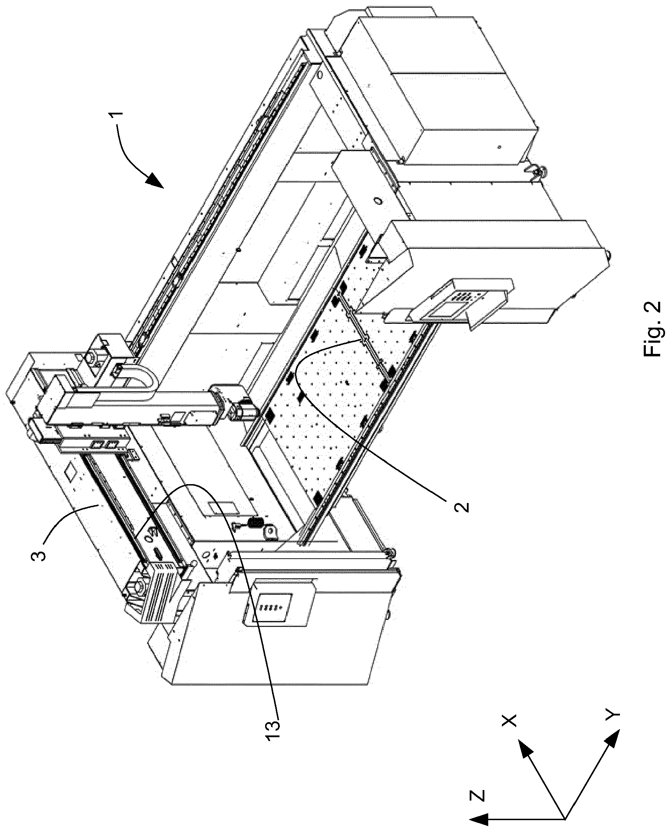

The third support 8 may be, in particular, movable in a vertical direction both with respect to the first support 4, and with respect to the second support 5, with the possibility of adopting at least one upper position (Figures 2, 4, 6) and at least one lower position (Figures 1, 3, 5). The movable vertical sliding means 9, when it is in the aforesaid lower position, is further from the fixed vertical sliding means 6 and is nearer the work surface 2 than when it is in the aforesaid upper position.

The second support 5 may be, in particular, provided with guide means 10 coupled both with the fixed vertical sliding means 6, and with the movable vertical sliding means 9. The guide means 10 may comprise, in particular, one or more vertical linear sliding guides.

The first support 4 and the third support 8 are slidingly coupled together by coupling means 11. This coupling means 11 may comprise, in particular, vertical sliding means for slidable coupling between the first support 4 and the third support 8, for example with at least one sliding vertical linear guide and at least one shoe that is slidable on the vertical linear guide.

The machining centre 1 may comprise, in particular, sensor means 12 configured to detect at least one operating parameter of at least one movable element of the machining centre 1. This movable element may comprise, in particular, at least one element of the machining unit 7 and/or at least one element of the second support 5.

The machining centre 1 may comprise, in particular, control means (electronic and programmable, for example an electronic processor) configured to receive signals from the sensor means 12 and to position the third support 8 on the basis of the aforesaid signals, by a feedback control, so as to position the third support 8 in the most suitable position for reducing vibrations during machining.

The sensor means 12 may comprise, in particular, means for detecting vibrations and/or the position of at least one part of the machining unit 7. The sensor means for detecting vibrations may comprise, in particular, at least one accelerometer. The sensor means 12 may comprise, in particular, means for detecting flexure and/or vibrations and/or positions of at least one part of the second support 5.

The third support 8 may comprise, in particular, at least one longitudinal body extending vertically and coupled telescopically with the first support 4, as in the embodiment of Figures 1-6.

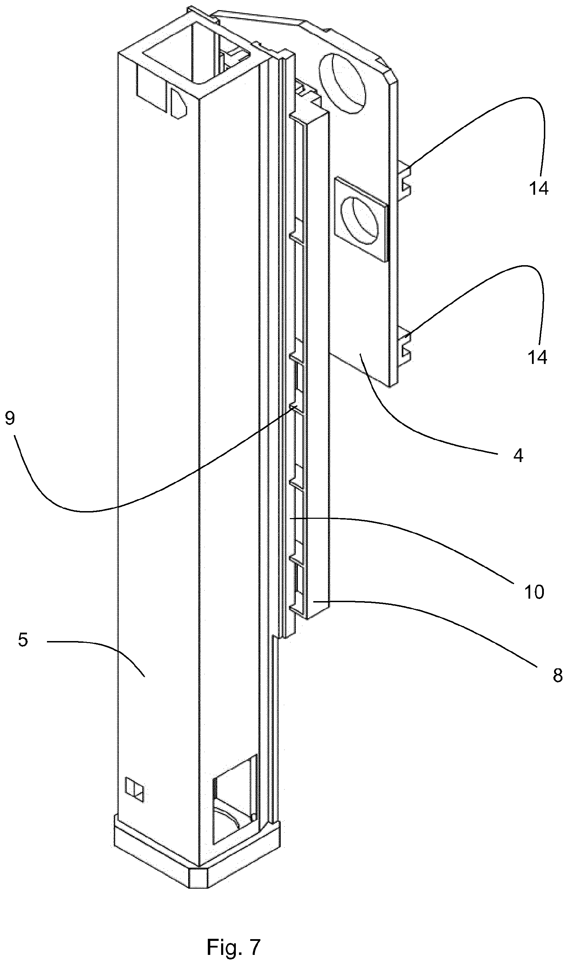

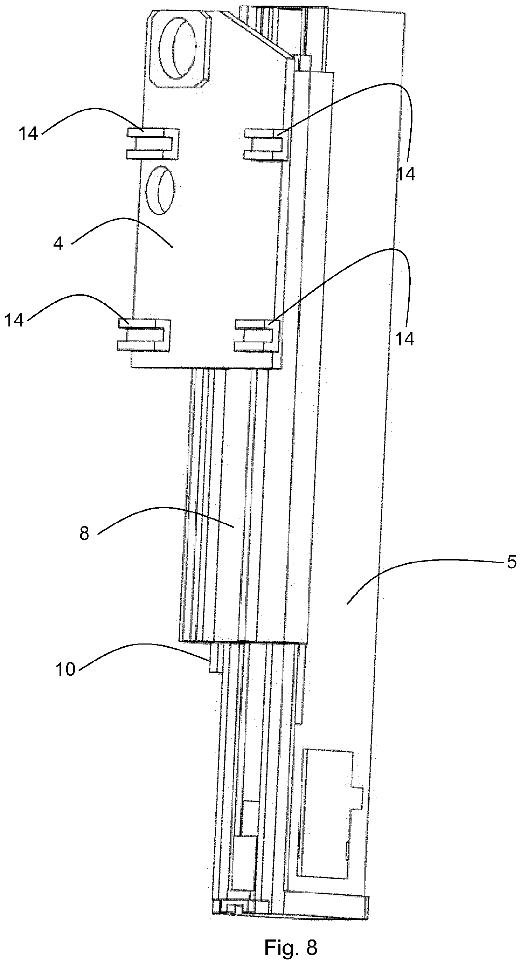

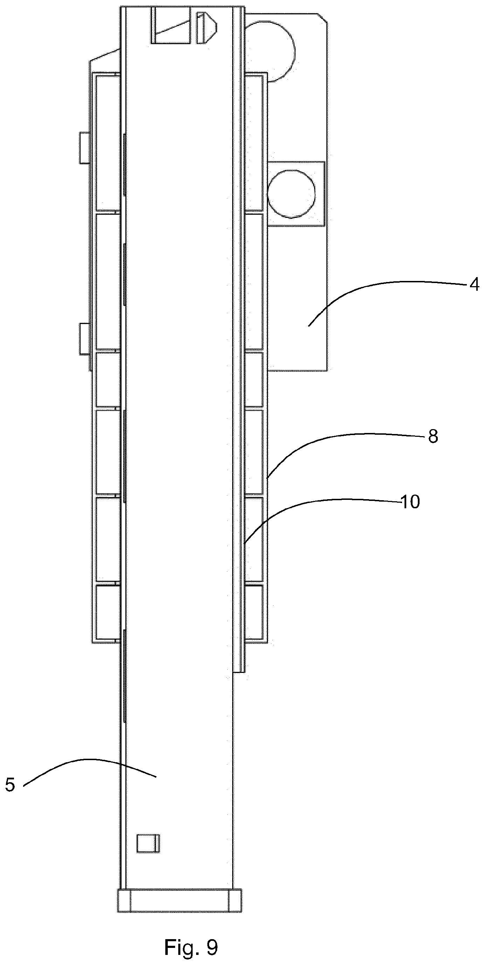

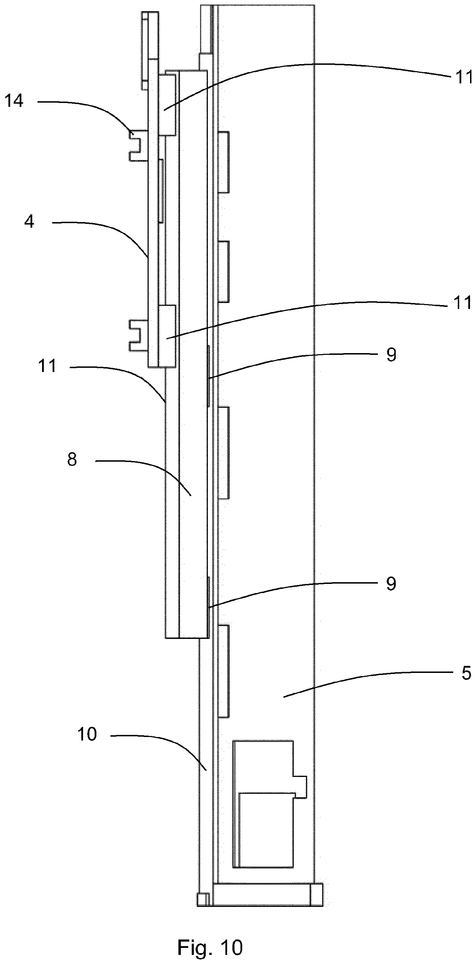

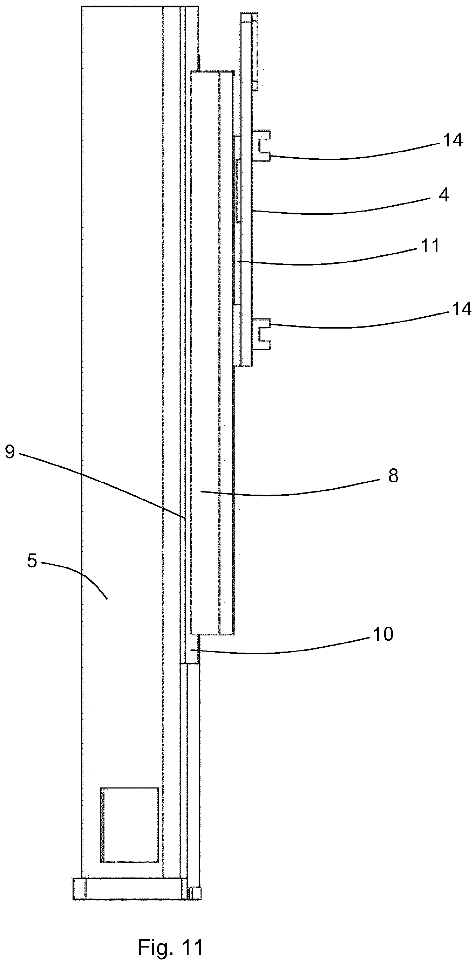

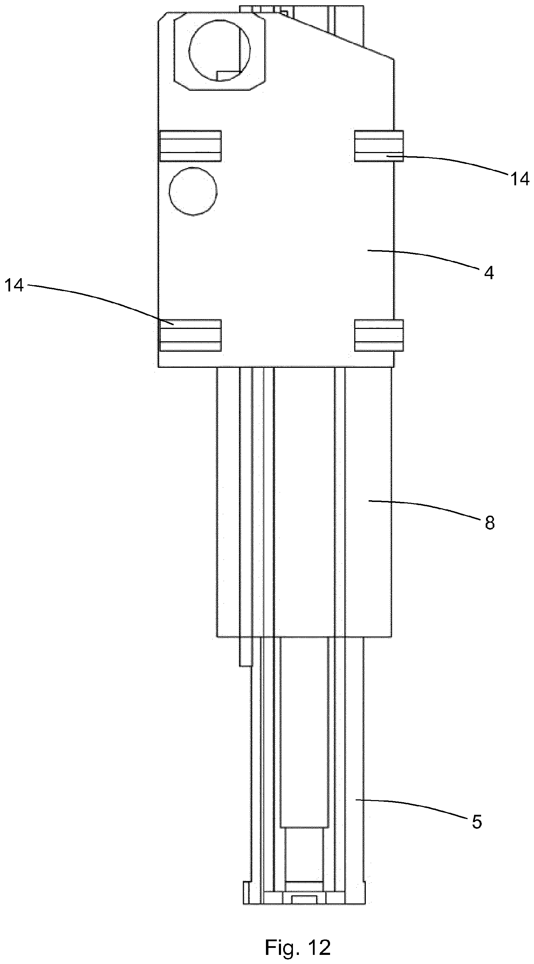

As said, the first support 4 may comprise a first sliding carriage or slide on the cross member 3. The third support 8 may comprise, in particular, a second sliding carriage or slide on the first support 4 (first carriage or slide), as in the example of Figures 7-12.

The machining centre 1 may comprise, in particular, locking means for locking in position, in a removable manner, the third support 8 with respect to the first support 4. The locking means may comprise, in particular, brake means operating between the third support 8 and the first support 4, for example a brake driven by an actuator, in particular a fluid-driven actuator (for example linear) controlled by the programmable electronic control means.

The vertical movement of the third support 8 with respect to the first support 4 enables the movable vertical sliding means 9 to be positioned in various positions in a vertical direction in a selective manner, increasing the distance from the work surface 2 (by upward movements) or decreasing the distance from the work surface 2 (by downward movements). Further, the vertical movement of the third support 8 with respect to the first support 4 enables the movable vertical sliding means 9 to be positioned so as to increase or decrease selectively the distance of the movable vertical sliding means 9 with respect to the first support 4. In the embodiment of Figures 1-6, the vertical movement of the third support 8 with respect to the first support 4 enables the movable vertical sliding means 9 to be positioned so as to increase or decrease selectively the distance of the movable vertical sliding means 9 with respect to the fixed vertical sliding means 6.

When the third support 8 moves vertically with respect to the first support 4, a vertical slide is possible of the third support 8 also with respect to the second support 5, owing to the coupling between the movable vertical sliding means 9 and the guide means 10 arranged on the second support 5.

The machining centre 1 may comprise, in particular, actuating means configured to move the third support 8 with respect to the first support 4 and respect to the second support 5.

Alternatively or in addition to the aforesaid actuating means, it is possible to provide for the machining centre 1 to comprise, in particular, first abutting means arranged on the second support 5 and second abutting means arranged on the third support 8, in which the first abutting means and the second abutting means can interact in reciprocal contact, in a vertical abutting or stop direction, by moving the second support 5 along the controlled vertical machining axis (Z axis).

In this case, the (electronic programmable) numeric control means may be configured to control the third machining axis (vertical axis Z) so as to position the first abutting means, arranged on the second support 5, in a desired position, so as to enable the third support 8 to be positioned in the desired position by contact interaction between the first abutting means and the second abutting means arranged on the third support 8. During the vertical positioning step of the third support 8, whilst the first abutting means and the second abutting means interact in reciprocal contact, the locking means of the third support 8 will be unlocked, to then return to a locked configuration once the third support 8 has reached the desired position.

The numeric control machining centre 1 in the specific embodiments illustrated here is of the type with a movable cross member 3 and a fixed work surface 2 (workpiece-holding table), although it is possible to envisage embodiments of the type with a fixed cross member and movable work surface (workpiece-holding table).

As has been seen, the machining centre 1 may comprise, in particular, slidable vertical coupling means between the first support 4 and the third support 8, and slidable vertical coupling means between the second support 5 and the third support 8, so that the third support 8 is positionable both in a vertical direction with respect to the first support 4, and with respect to the second support 5.

In use, when the tool carried by the machining unit 7 has to machine the workpiece at a relatively high position ("high" workpiece), the third support 8 can be positioned in an upper position (for example as in Figures 2, 4, 6), so as to keep free the machining zone and permit machining of the workpiece without any obstruction by the third support 8.

On the other hand, when the tool carried by the machining unit 7 has to machine the workpiece in a relatively low position ("low" workpiece), the third support 8 can be positioned in a lower position (for example as in Figures 1, 3, 5), in such a manner that the movable vertical sliding means 9 is placed at a lower position and is thus nearer the machining zone (where the tool machines the workpiece), so that the distance is relatively reduced between the machining zone and the nearest mechanical support constraint of the machining unit 7 (constraint shown by the movable vertical sliding means 9 on the third support 8).

It is further possible to perform automatic vertical positioning of the third support 8, using the vibration signals supplied by the sensor means 12, in order to place the movable vertical sliding means 9 in the most suitable position for the vibrations generated by the machining to be acceptable.

## Claims

1. CNC machining centre (1), comprising:
- at least one work surface (2);
- at least one horizontal cross member (3) arranged above said work surface (2) and with at least one reciprocal movement between said cross member (3) and said work surface (2) along a controlled horizontal first machining axis (Y);
- at least one first support (4) movable on said cross member (3) along a controlled horizontal second machining axis (X);
- at least one second support (5) movable with respect to said first support (4) along a controlled vertical third machining axis (Z);
- at least one machining unit (7) arranged on said second support (5) with the possibility of assuming at least one work position in which it can perform a machining operation on a workpiece arranged on said work surface (2);
- at least one third support (8) movable on said first support (4) by means of coupling means (11) for slidingly coupling said third support (8) and said first support (4) in a vertical direction, said third support (8) being provided with vertical sliding means (9) for slidingly coupling said third support (8) and said second support (5) in a vertical direction, said third support (8) being movable in vertical direction between at least one upper position, in which said vertical sliding means (9) is further away from said work surface (2), and at least one lower position, in which said vertical sliding means (9) is closer to said work surface (2);
**characterized in that** said first support (4) is provided with vertical sliding means (6) for sliding coupling said second support (5) along said third machining axis (Z).

2. Machining centre according to claim-2 **1**, wherein said second support (5) is provided with guide means (10) coupled both with said vertical sliding means (6) of said first support (4) and with said vertical sliding means (9) of said third support (8).

3. Machining centre according to claim **2**, wherein said guide means (10) comprises one or more linear sliding guides.

4. Machining centre according to claim **2 or 3**, wherein said vertical sliding means (6) of said first support (4) comprises runner means.

5. Machining centre according to any one of claims **2 to 4**, wherein said vertical sliding means (9) of said third support (8) comprises runner means.

6. Machining centre according to any preceding claim, comprising sensor means (12) configured to detect at least one operating parameter of said machining unit (7) and/or of said second support (5), and control means configured to receive signals from said sensor means (12) and to position said third support (8) based on said signals.

7. Machining centre according to claim **6**, wherein said sensor means (12) comprises means for detecting vibration and/or position of at least a part of said machining unit (7); said sensor means (12) comprising, in particular, at least one accelerometer.

8. Machining centre according to claim **6 or 7**, wherein said sensor means (12) comprises means for detecting bending and/or vibration and/or position of at least a part of said second support (5).

9. Machining centre according to any preceding claim, wherein said third support (8) comprises at least one longitudinal body vertically extended and telescopically coupled with said first support (4).

10. Machining centre according to any preceding claim, wherein said first support (4) comprises a first carriage or slide sliding on said cross member (3) and said third support (8) comprises a second carriage or slide sliding on said first carriage or slide.

11. Machining centre according to any preceding claim, comprising locking means for locking said third support (8) relative to said first support (4) in a resolvable manner.

12. Machining centre according to any preceding claim, comprising actuator means configured to move said third support (8) with respect to said first support (4).

13. Machining centre according to any preceding claim, comprising actuator means configured to move said third support (8) with respect to said second support (5).

14. Machining centre according to any preceding claim, comprising numerical control means configured to control said third machining axis (Z) so as to position first abutment means arranged on said second support (5) in a desired position in a manner to allow the positioning of said third support (8) by means of the contact interaction between said first abutment means and second abutment means arranged on said third support (8).

## Patentansprüche

1. CNC Bearbeitungszentrum (1), aufweisend:
- wenigstens eine Arbeitsfläche (2);
- wenigstens einen horizontalen Querträger (3), der über der Arbeitsfläche (2) angeordnet ist, und wobei wenigstens eine Hin- und Herbewegung zwischen dem Querträger (3) und der Arbeitsfläche (2) entlang einer kontrollierten, horizontalen ersten Bearbeitungsachse (Y) möglich ist;
- wenigstens einen ersten Träger (4), der an dem Querträger (3) entlang einer kontrollierten, horizontalen zweiten Bearbeitungsachse (X) bewegbar ist;
- wenigstens einen zweiten Träger (5), der bezüglich des ersten Trägers (4) entlang einer kontrollierten, vertikalen dritten Bearbeitungsachse (Z) bewegbar ist;
- wenigstens eine Bearbeitungseinheit (7), die an dem zweiten Träger (5) angeordnet ist, mit der Möglichkeit, wenigstens eine Arbeitsposition anzunehmen, in der sie einen Bearbeitungsvorgang an einem auf der Arbeitsfläche (2) angeordneten Werkstück durchführen kann;
- wenigstens einen dritten Träger (8), der an dem ersten Träger (4) bewegbar ist mit Hilfe einer Kopplungseinrichtung (11) zum gleitenden Koppeln des dritten Trägers (8) und des ersten Trägers (4) in einer vertikalen Richtung, wobei der dritte Träger (8) mit einem vertikalen Gleitmittel (9) versehen ist zum gleitenden Koppeln des dritten Trägers (8) und des zweiten Trägers (5) in einer vertikalen Richtung, wobei der dritte Träger (3) in vertikaler Richtung beweglich ist zwischen wenigstens einer oberen Position, in welcher das vertikale Gleitmittel (9) weiter von der Arbeitsfläche (2) weg ist und wenigstens einer unteren Position, in welcher das vertikale Gleitmittel (9) der Arbeitsfläche (2) näher ist,
**dadurch gekennzeichnet, dass** der erste Träger (4) mit einem vertikalen Gleitmittel (6) versehen ist zum gleitenden Koppeln des zweiten Trägers (5) entlang der dritten Bearbeitungsachse (Z).

2. Bearbeitungszentrum nach Anspruch 1, wobei der zweite Träger (5) mit einer Führungseinrichtung (10) versehen ist, die sowohl mit dem vertikalen Gleitmittel (6) des ersten Trägers (4) wie auch dem vertikalen Gleitmittel (9) des dritten Trägers (8) gekoppelt ist.

3. Bearbeitungszentrum nach Anspruch 2, wobei die Führungseinrichtung (10) eine oder mehrere lineare Gleitführungen umfasst.

4. Bearbeitungszentrum nach Anspruch **2 oder 3**, wobei das vertikale Gleitmittel (6) des ersten Trägers (4) Laufmittel umfasst.

5. Bearbeitungszentrum nach einem der Ansprüche **2 bis 4**, wobei das vertikale Gleitmittel (9) des dritten Trägers (8) Laufmittel umfasst.

6. Bearbeitungszentrum einem der vorstehenden Ansprüche, mit einer Sensoreinrichtung (12), die ausgestaltet sind, um wenigstens einen Betriebsparameter der Bearbeitungseinheit (7) und/oder des zweiten Trägers (5) zu erfassen, und Steuermitteln, die ausgestaltet sind zum Empfang von Signalen von der Sensoreinrichtung (12) und zum Positionieren des dritten Trägers (8), basierend auf den Signalen.

7. Bearbeitungszentrum nach Anspruch 6, wobei die Sensoreinrichtung (12), Mittel aufweist zum Erfassen einer Vibration und/oder Position wenigstens eines Teils der Bearbeitungseinheit (7); wobei die Sensoreinrichtung (12) insbesondere wenigstens einen Beschleunigungsmesser umfasst.

8. Bearbeitungszentrum nach Anspruch **6 oder 7**, wobei die Sensoreinrichtung (12) Mittel aufweist zum Erfassen eines Biegens und/oder einer Vibration und/oder einer Position wengistens eines Teils des zweiten Trägers (5).

9. Bearbeitungszentrum nach einem der vorstehenden Ansprüche, wobei der dritte Träger (8) wenigstens einen longitudinalen Körper ausweist, der vertikal erweitert und teleskopisch mit dem ersten Träger (4) gekoppelt ist.

10. Bearbeitungszentrum nach einem der vorstehenden Ansprüche, wobei der erste Träger (4) wenigstens ein Laufwerk oder einen Schlitten aufweist, das/der an dem Querträger (3) gleitet und der dritte Träger (8) ein zweites Laufwerk oder Schlitten aufweist, das/der an dem ersten Laufwerk oder Schlitten gleitet.

11. Bearbeitungszentrum nach einem der vorstehenden Ansprüche, mit Verriegelungsmitteln zum Verriegeln des dritten Trägers (8) relativ zum dem dritten Träger (4) in einer lösbaren Weise.

12. Bearbeitungszentrum nach einem der vorstehenden Ansprüche, mit Betätigungsmitteln, die ausgestaltet sind zum Bewegen des dritten Trägers (8) in Bezug auf den ersten Träger (4).

13. Bearbeitungszentrum nach einem der vorstehenden Ansprüche, mit Betätigungsmitteln, die ausgestaltet sind zum Bewegen des dritten Trägers (8) in Bezug auf den zweiten Träger (5).

14. Bearbeitungszentrum nach einem der vorstehenden Ansprüche, mit numerischen Steuerungsmitteln, die ausgestaltet sind zum Steuern der dritten Bearbeitungsachse (Z), um an dem zweiten Träger (5) angeordnete erste Anschlagmittel in einer gewünschten Position in einer Weise zu positionieren, dass die Positionierung des dritten Trägers (8) mit Hilfe des kontaktierenden Zusammenwirkens zwischen den ersten Anschlagmitteln und zweiten Anschlagmitteln, angeordnet an dem dritten Träger (8), ermöglicht ist.

## Revendications

1. Centre d'usinage CNC (1), comprenant :
- au moins une surface de travail (2) ;
- au moins une traverse horizontale (3) disposée au-dessus de ladite surface de travail (2) et avec au moins un mouvement de va-et-vient entre ladite traverse (3) et ladite surface de travail (2) selon un premier axe d'usinage (Y) horizontal commandé ;
- au moins un premier support (4) mobile sur ladite traverse (3) le long d'un deuxième axe d'usinage (X) horizontal commandé ;
- au moins un deuxième support (5) mobile par rapport audit premier support (4) le long d'un troisième axe d'usinage (Z) vertical commandé ;
- au moins une unité d'usinage (7) disposée sur ledit deuxième support (5) avec la possibilité de prendre au moins une position de travail dans laquelle elle peut effectuer une opération d'usinage sur une pièce à usiner disposée sur ladite surface de travail (2) ;
- au moins un troisième support (8) mobile sur ledit premier support (4) au moyen d'un moyen de couplage (11) pour coupler de manière coulissante ledit troisième support (8) et ledit premier support (4) dans une direction verticale, ledit troisième support (8) étant pourvu d'un moyen de coulissement vertical (9) pour coupler de manière coulissante ledit troisième support (8) et ledit deuxième support (5) dans une direction verticale, ledit troisième support (8) étant mobile dans la direction verticale entre au moins une position supérieure, dans laquelle ledit moyen de coulissement vertical (9) est plus éloigné de ladite surface de travail (2), et au moins une position inférieure, dans laquelle ledit moyen de coulissement vertical (9) est plus proche de ladite surface de travail (2) ;
**caractérisé en ce que** ledit premier support (4) est pourvu d'un moyen de coulissement vertical (6) pour être couplé de manière coulissante avec ledit deuxième support (5) le long dudit troisième axe d'usinage (Z).

2. Centre d'usinage selon la revendication 1, dans lequel ledit deuxième support (5) est pourvu d'un moyen de guidage (10) couplé à la fois audit moyen de coulissement vertical (6) dudit premier support (4) et audit moyen de coulissement vertical (9) dudit troisième support (8).

3. Centre d'usinage selon la revendication 2, dans lequel ledit moyen de guidage (10) comprend un ou plusieurs guides coulissants linéaires.

4. Centre d'usinage selon la revendication 2 ou 3, dans lequel ledit moyen de coulissement vertical (6) dudit premier support (4) comprend des moyens de glissière.

5. Centre d'usinage selon l'une des revendications 2 à 4, dans lequel ledit moyen de coulissement vertical (9) dudit troisième support (8) comprend des moyens de glissière.

6. Centre d'usinage selon l'une des revendications précédentes, comprenant un moyen de détection (12) configuré pour détecter au moins un paramètre de fonctionnement de ladite unité d'usinage (7) et/ou dudit deuxième support (5), et un moyen de commande configuré pour recevoir des signaux dudit moyen de détection (12) et pour positionner ledit troisième support (8) sur la base desdits signaux.

7. Centre d'usinage selon la revendication 6, dans lequel ledit moyen de détection (12) comprend des moyens pour détecter des vibrations et/ou la position d'au moins une partie de ladite unité d'usinage (7) ; ledit moyen de détection (12) comprenant notamment au moins un accéléromètre.

8. Centre d'usinage selon la revendication 6 ou 7, dans lequel ledit moyen de détection (12) comprend un moyen pour détecter une flexion et/ou une vibration et/ou une position d'au moins une partie dudit deuxième support (5) .

9. Centre d'usinage selon l'une des revendications précédentes, dans lequel ledit troisième support (8) comprend au moins un corps longitudinal étendu verticalement et couplé de manière télescopique audit premier support (4).

10. Centre d'usinage selon l'une des revendications précédentes, dans lequel ledit premier support (4) comprend un premier chariot ou coulisseau coulissant sur ladite traverse (3) et ledit troisième support (8) comprend un deuxième chariot ou coulisseau coulissant sur ledit premier chariot ou coulisseau.

11. Centre d'usinage selon l'une des revendications précédentes, comprenant un moyen de verrouillage pour verrouiller ledit troisième support (8) par rapport audit premier support (4) de manière séparable.

12. Centre d'usinage selon l'une des revendications précédentes, comprenant un moyen d'actionnement configuré pour déplacer ledit troisième support (8) par rapport audit premier support (4).

13. Centre d'usinage selon l'une des revendications précédentes, comprenant un moyen d'actionnement configuré pour déplacer ledit troisième support (8) par rapport audit deuxième support (5).

14. Centre d'usinage selon l'une des revendications précédentes, comprenant un moyen de commande numérique configuré pour commander ledit troisième axe d'usinage (Z) de manière à positionner un premier moyen de butée disposé sur ledit deuxième support (5) dans une position souhaitée de manière à permettre le positionnement dudit troisième support (8) au moyen de l'interaction de contact entre ledit premier moyen de butée et un deuxième moyen de butée disposé sur ledit troisième support (8).
